# EUROPÄISCHE PATENTSCHRIFT

(11) **EP 0 716 100 B1**
(45) Veröffentlichungstag und Bekanntmachung des Hinweises auf die Patenterteilung: **09.06.1999**
(21) Anmeldenummer: 95118729.3
(22) Anmeldetag: 29.11.1995
(51) Int. Cl.: C08F 20/12, C08F 265/06

(54) **Flugzeugverglasung mit Lichtstabilität, chemischer Stabilität und Wärmeformbeständigkeit**
Glazing for planes with light stability, chemical stability and heat distortion resistance
Vitrages pour avions à stabilité la lumière, stabilité chmique et résistance à la déformation à chaud

(30) Priorität: 06.12.1994 DE 4443355
(43) Veröffentlichungstag der Anmeldung: 12.06.1996
(73) Patentinhaber: Röhm GmbH, 64293 Darmstadt (DE)
(72) Erfinder: Krieg, Manfred, Dr., D-64289 Darmstadt (DE); Weber, Christa, D-64823 Gross-Umstadt (DE); Szigeti, Peter Rudolf, Dr., D-64572 Büttelborn (DE)

(56) Entgegenhaltungen:
- EP-A- 0 124 273
- GB-A- 2 277 521
- US-A- 4 622 377

## Beschreibung

Die Erfindung betrifft Kunststoffplatten auf Basis Polymethylmethacrylat, die als Verglasungsmaterial für Flugzeuge verwendet werden und hohen mechanischen, physikalischen und chemischen Belastungen gewachsen sein müssen. Beispielsweise ist die Intensität kurzwelligen Lichts in großen Höhen um 12000 m ungleich intensiver als am Erdboden, oder es treten bei Reinigungsprozeduren am Flugzeug außergewöhnliche chemische Belastungen auf. Typisch sind auch hohe Temperaturen und hohe Temperaturunterschiede. Alle diese Erfordernisse machen es notwendig, für die Flugzeugverglasung ein besonderes Material zu konzipieren.

### Stand der Technik

### Anforderungen:

Die Flugzeugindustrie hat für die Verwendung von Kunststoffscheiben als Verglasungsmaterial eine Reihe von Forderungen aufgestellt. Ein Grunderfordernis ist hohe Transparenz und Farblosigkeit der Flugzeugverglasung, sowie eine gute Stabilität gegen Vergilben.
Eine weitere Forderung betrifft die Wärmeformbeständigkeit des Materials. Die entsprechende Spezifikation (Military P-25690 A) verlangt, daß bei einer thermischen Belastung von biaxial gereckten Glasscheiben bei 110°C über 24 Stunden der Schrumpf (thermische Relaxation) nicht über 10% betragen darf.
Wichtig ist auch eine hohe Beständigkeit gegen Spannungskorrosion. Auch hier existiert eine Norm: Military P-25690 B bzw. LN 65321.
Natürlich gibt es auch Praxisprüfungen. So soll ein gutes Flugzeugverglasungsmaterial mindestens 5000 Flugstunden ohne Beanstandung überstehen.

Es ist sehr schwierig, allen Erfordernissen gleichzeitig zu entsprechen. Oft zieht die Verbesserung einer Eigenschaft die Verschlechterung einer anderen nach sich. In der Literatur, insbesondere in der Patentliteratur, wird meist nur eine Eigenschaft und ihre Verbesserung beschrieben.

### Patentliteratur:

So beschreibt die EP 0124273B1 ein Flugzeugverglasungsmaterial auf Basis eines Methylmethacrylat-Styrol-Maleinsäureanhydrid- Copolymeren mit einem Anteil des erstgenannten Monomeren von 93 bis 95% und der beiden letztgenannten Monomeren von zusammen 5 bis 7% mit verbesserter thermischer Relaxation. Das Material enthält außerdem ein vernetzendes Monomeres, bevorzugt 0.5% Allylmethacrylat, sowie geringe Mengen an UV-Absorber. Durch den Gehalt an Styrol ist allerdings zu erwarten, daß die Vergilbungsgefahr erhöht ist.
Das US-Patent 4,622,377 beansprucht 0.4 bis zu 2.5 Mol-% Neopentylenglykol-dimethacrylat als Vernetzer in Flugzeugscheiben, bevorzugt auf Basis PMMA, zur Verbesserung der Widerstandsfähigkeit gegen die chemische Belastung durch Schwefelsäuretröpfchen. Verbesserungen der anderen Eigenschaften dieses Materials, wie UV-Stabilität oder thermische Stabilität werden nicht betrachtet.

In der japanischen Patentschrift JP 03 47,856 werden lichtbeständige Scheiben auf Basis PMMA beschrieben. Es werden sowohl ein UV-Absorber auf Basis Benztriazol, als auch ein UV-Stabilisator auf Basis eines sterisch gehinderten Amins eingesetzt.
Auch hier liegt der Vorteil vorwiegend in der guten UV-Stabilität des Materials.

Die Britische Patentanmeldung GB 2277521a beschreibt ein Verfahren zur Herstellung von Kunststoff-Artikeln, die Poly(meth)acrylate und Effektpigmente enthalten und für dekorative Anwendungen, z.B. Sanitäranwendungen, vorgesehen sind. Durch das beschriebene Herstellungsverfahren wird vermieden, daß sich die Pigmente in Form sogenannter Bénat-Zellen orientieren und somit ein ungleichmäßigen Farbeindruck entstehen lassen. Die Aufgabe wird durch Verwendung einer bestimmten Pigment-MindestgrÖße und Durchführung einer schnellen Polymerisation mit erhöhtem Temperaturprofil erreicht.

### Zum Aufbau eines Flugzeugverglasungsmaterials:

Reines gerecktes PMMA erreicht nur Vicat-Werte von 110-115°C. Diese reichen nicht aus, um die oben genannte Spezifikation zu erfüllen. Daher ist es notwendig, Comonomere einzuführen, deren Zusatz zu einer Erhöhung des Vicat-Wertes führt. Methacrylamid, Methacrylsäure, Isobornylmethacrylat, oder Styrol und Maleinsäureanhydrid sind genannt worden; außerdem eine Reihe von polyethylenisch ungesättigten (vernetzenden) Monomeren wie zum Beispiel Allylmethacrylat, Ethylenglykoldimethacrylat, Tetraethylenglykoldimethacrylat. Nicht alle Monomere sind gleich gut geeignet. Sie können zum Beispiel bei der Gußpolymerisation durch eine zu schnelle Gelbildung Produktionsschwierigkeiten verursachen, wie einige Dimethacrylate, oder zu Gelbfärbung und Partikelbildung führen, wie Methacrylamid, oder sie sind toxisch.

Vernetzende Monomere auf Acrylatbasis sind zwar genannt worden, (zum Beispiel eine Aufzählung auf Seite 3, Zeile 59-65 in EPA 0 124 273), ohne daß eine besondere Wirkung herausgestellt worden wäre.

Zu den Erfordernissen für ein Flugzeugverglasungsmaterial gehört eine gute Stabilität gegen UV-Strahlen. Daher wird es durchwegs mit UV-Absorbern ausgerüstet. Mittel der Wahl sind UV-Absorber auf Basis von Benzotriazol-Derivaten, wie z.B. das von Ciba-Geigy vertriebene Tinuvin P^{R}. Es wird zum Beispiel in der EPA 0 124 273 genannt. UV-Absorber werden in der Literatur auch als UV-Stabilisatoren bezeichnet. Sie wirken durch die Absorption ultravioletter Strahlen wie ein optisches Filter, also rein physikalisch.
Der Zusatz von sterisch gehinderten Aminen in einem Flugzeugverglasungsmaterial hat eine ganz andere Wirkung, nämlich eine chemische. Sie fangen Radikale ab, die sich bei Strahlenbelastung bilden und die sonst das Glasmaterial langsam zerstören würden. Solche Zusätze sind in der japanischen Patentschrift JP 03 47,856 beschrieben und werden als "hindered amine light stabilizers", abgekürzt "HALS" bezeichnet.

Ein wichtiges Produktionshilfsmittel bei der Herstellung von Gußpolymerisaten ist ein geeignetes Trennmittel, das das Loslösen des Formkörpers aus seiner Form erleichtern soll. In der Patentanmeldung EPA 97 948 wird z.B. Dioctylsulfosuccinat genannt.

### Aufgabe und Lösung

Aufgabe der Erfindung ist es, ein Flugzeugverglasungsmaterial zu finden, das allen Anforderungen genügt, also gute Tranparenz, Lichtechtheit, Wärmeformbeständigkeit und chemische Widerstandsfähigkeit aufweist. Alle diese Eigenschaften sollen in einem Material vereinigt sein.

Bei den Versuchen zur Lösung des Problems stellte sich heraus, daß es nicht genügt, die in der Literatur genannten, für die Verbesserung einer Eigenschaft verantwortlichen Parameter zu kombinieren. Zu oft erhält man durch die Verbesserung einer Eigenschaft gleichzeitig die Verschlechterung einer anderen. Kritisch sind auch Mengenverhältnisse. Nur bestimmte Zusatzmengen in engen Grenzen sind optimal.
Zur Lösung der Aufgabe gehörte nicht nur eine optimale Zusammensetzung. Es wurde auch gefunden, daß Veränderungen an den Verfahrensparametern der Gußpolymerisation essentiell für die Verbesserung der anwendungstechnischen Eigenschaften sind.
Das erfindungsgemäße Produkt ist eine transparente Kunststoffplatte für die Flugzeugverglasung, bestehend im wesentlichen aus einem Copolymeren von Methylmethacrylat und mehrfunktionellen Acrylaten, bei dem der Anteil an Methylmethacrylat > 95 Gew% und der Anteil an mehrfunktionellen Acrylaten 0.5 bis 5 % des Copolymeren ausmacht, das eine Erweichungstemperatur gemessen nach Vicat von mindestens 120°C vor dem biaxialen Recken bzw. mindestens 117°C nach dem biaxialen Recken besitzt und erhältlich ist durch Gußpolymerisation, wobei die Temperatur zur Endpolymerisation mindestens 5 Std. bei 110 bis 130 °C gehalten wird.

Hauptkomponente des Polymeren für die Flugzeugverglasung ist Methylmethacrylat. Es ist zu > 95 Gew% im Endprodukt enthalten. Vorzugsweise ist sein Anteil 96 bis 98 %. Polymethylmethacrylat als Material für sich allein ist vergilbungsfrei.

Zur Sicherung guter thermischer Relaxationswerte bzw. hoher Vicat-Werte werden vernetzende Monomere einpolymerisiert. Überraschend wurde hier gefunden, daß mehrfunktionelle Acrylate die beste Kombination in den anwendungstechnischen Eigenschaften ergeben. Vor allem zeigen sie den geringsten Rückgang im Vicat-Wert nach dem biaxialen Recken. Außerdem verbessern sie die Widerstandsfähigkeit gegen Spannungskorrosion. Es sei hier angemerkt, daß dies bei Verwendung anderer Vernetzer nicht selbstverständlich ist. Das häufig eingesetzte Allylmethacrylat bewirkt zwar gute Beständigkeit gegen Spannungskorrosion und führt auch zu hohen Vicat-Werten vor dem Recken. Nach dem Recken und der damit verbundenen thermischen Belastung sind die Vicat-Werte aber 5 bis 10 °C niedriger. Eine Gegensteuerung durch Erhöhung des Vernetzergehalts bringt keine Verbesserung, es sei denn, man setzt > 10% davon ein. Dasselbe gilt für das häufig verwendete Ethylenglykoldimethacrylat.
Erfindungsgemäße Acrylatvernetzer sind bi-, tri- oder tetrafunktionell bezogen auf die Acrylatfunktion. Bifunktionelle Acrylate sind zum Beispiel Ethylenglykoldiacrylat, 1,3 Butandioldiacrylat, 1,4 Butandioldiacrylat, 1,6 Hexandioldiacrylat, Polyethylenglykol-diacrylat. Ein Beispiel für ein trifunktionelles Acrylat ist Trimethylolpropantriacrylat. Pentaerythrittetraacrylat ist ein Beispiel für ein tetrafunktionelles Acrylat. Die Menge des eingesetzten mehrfunktionellen Acrylats liegt bei 0.5 bis 5 %, bevorzugt bei 1-3 %.

Das erfindungsgemäße Produkt enthält in der Regel einen UV-Absorber, der ein tieferes Eindringen von UV-Licht durch Absorption verhindert, und/oder einen Radikalfänger, der durch Strahlenbelastung erzeugte Radikale in ihrer zerstörerischen Wirkung unschädlich macht.

Wirksame UV-Absorber sind zum Beispiel Anthrachinon- und Benzophenonderivate wie 2-Hydroxy-4-methoxybenzophenon oder bevorzugt Verbindungen auf Basis Benztriazol, wie 2-(2'-Hydroxy-5'-methylphenyl)benztriazol.
Als UV-Stabilisatoren mit der Wirkung eines Radikalfängers werden im erfindungsgemäßen Produkt sterisch gehinderte Amine (HALS), wie zum Beispiel bis-2,2,6,6-Tetramethyl-4-piperidylsebacat, eingesetzt. Die Zusatzmengen liegen erfindungsgemäß bei 0.005 bis 0.5%, bevorzugt bei 0.03 bis 0.2%. sowohl für den UV-Absorber als auch für den UV-Stabilisator. In der Regel sind beide im erfindungsgemäßen Polymerisat enthalten.

Das erfindungsgemäße Produkt enthält vorzugsweise ein wirksames Trennmittel auf Basis Sulfosuccinat, zum Beispiel Natrium-diisooctyl-sulfosuccinat. Es wirkt bereits in kleinsten Dosierungen von 0.001% bis 0.1%, was vorteilhaft ist, denn bei höheren Dosierungen bestünde die Gefahr einer Weichmacherwirkung auf die Polymermatrix.

Außerdem können weitere Monomere zugesetzt werden, die bestimmte Funktionen erfüllen sollen, wie zum Beispiel eine gute Haftung des Formkörpers an seiner Form während und nach der Polymerisation. Hierfür haben sich Hydroxyester der (Meth)acrylsäure bewährt, wie zum Beispiel 2-Hydroxyethyl-(meth)acrylat oder 2-Hydroxypropyl-(meth)-acrylat, sowie auch Monomere mit Aminfunktion wie zum Beispiel Diethylaminoethyl-(meth)acrylat. Die Zusatzmengen liegen bei 0.1 bis 1%. Es können auch 0,01-1% eines Esters und/oder Amids der Acryl- und/oder Methacrylsäure sowie eines mehr-funktionellen Methacrylats und/oder eines hydroxyfunktionellen Methacrylats enthalten sein.

Selbstverständlich kann das Material auch eingefärbt oder nur leicht getönt werden. Die Transparenz muß aber gewahrt sein. Im Interesse guter optischer Durchsichteigenschaften sollen die Oberflächen paralel zueinander liegen und glatt und eben sein.

Um ein in allen anwendungstechnischen Belangen brauchbares Produkt zu erzielen, ist erfindungsgemäß eine Temperaturbehandlung notwendig. Sie entspricht in den Maßnahmen einer Endpolymerisation, die begonnen wird, wenn ca. 90% der eingesetzten Monomeren polymerisiert sind. Dazu erwärmt man das gegossene Material langsam von der Polymerisationstemperatur (meist um 40 °C) bis auf 110 bis 130 °C, bevorzugt auf 115 bis 120 °C und hält die Temperatur mindestens 5 Stunden auf dieser Höhe. Weniger als 5 Stunden nachzupolymerisieren, gibt deutlich schlechtere Ergebnisse, insbesondere bei Temperaturen von 110 bis 115 °C. In der Regel wird über 7 Stunden nachpolymerisiert, bevorzugt 10 Stunden und länger. über 20 Stunden Dauer bei der Temperaturnachbehandlung hinauszugehen bringt meist keine Verbesserung mehr. Die Wirkung dieser Temperaturbehandlung dürfte in einem veränderten Ordnungszustand der Makromoleküle liegen. Eine bloße Erniedrigung des Restmonomerengehalts zusammen mit einer weitgehenden Zerstörung des Restinitiators als Erklärung für den erzielten Effekt ist nicht ausreichend.

Letzte Fertigungsstufe ist das biaxiale Recken. Dazu wird das Material in bekannter Weise, zum Beispiel bei 140 bis 160 °C 1 bis 2 Stunden vortemperiert, dann ziehend oder pressend bis auf eine Dicke von ca. 30 %.biaxial gereckt. Der Reckungsgrad ist somit ca. 70%.

Das erfindungsgemäße Produkt weist ausgezeichnete Eigenschaften auf:
1. Erhöhte Wärmeformbeständigkeit: Der Vicat-Wert liegt vor dem biaxialen Recken bei >= 120 °C, nach dem Recken immer noch bei >= 117 °C. Vicat-Werte werden nach DIN ISO 306 bestimmt.
2. Hohe Beständigkeit gegen Spannungskorrosion: Es werden die Grenzwerte der beginnenden Rißbildung unter Lösungsmitteleinfluß gemessen. Sie werden nach Euronorm EN 215519 oder LN 65321 bestimmt und in N/mm² angegeben. Für das erfindungsgemäße Produkt liegen sie > 18 N/mm².
3. Niedrige Restmonomerengehalte: Die Restmonomerengehalte liegen bei < 0.5, vorzugsweise < 0.3%.

### BEISPIEL

### Herstellung einer erfindungsgemäßen PMMA-Platte

Eine Monomermischung enthaltend 97.75 Cew.% Mehylmethacrylat, 2 Gew.% Trimethylolpropantriacrylat, 0.05 Gew.% 2-(2'-Hydroxy-5'-methylphenyl)benztriazol, 0.05 Gew.% bis-2,2,6,6-Tetramethyl-4-piperidylsebacat, 0.1 Gew.% 2,2'-Azo-bis-isobutyronitril, 0.05 Gew.% tert.-Butylperbenzoat wurde in eine 6 mm dicke, aus zwei Glasscheiben und einer dazwischen am Rand umlaufenden Dichtungsschnur gebildete Flachkammer gefüllt und in einem Wasserbad von 40 °C zur Polymerisation gebracht. Zur Vervollständigung der Polymerisation wurde die Flachkammer anschließend langsam von 40 °C auf 115°C erwärmt und 10 Stunden bei dieser Temperatur gehalten. Dann wurde die Platte 1 Stunde einer Temperatur von 150 °C ausgesetzt. Diese Behandlung entspricht in ihren thermischen Bedingungen - und die sind hier wesentlich - einem Reckvorgang.

| Eigenschaften der fertigen Platte: | |
|---|---|
| Vicat-Wert in Anlieferung: | 121 °C |
| Vicat- Wert nach einer Wärmebehandlung | |
| 1Stunde, 150 °C | 119° C |
| Restmonomerengehalt: | 0.20 % |
| Spannungskorrosion nach LN 65321: | 20.3 N/mm² |

## Patentansprüche

1. Transparente Kunststoffplatte für die Flugzeugverglasung, bestehend im wesentlichen aus einem Copolymeren von Methylmethacrylat und mehrfunktionellen Acrylaten, bei dem der Anteil an Methylmethacrylat > 95 Gew% und der Anteil an mehrfunktionellen Acrylaten 0.5 bis 5 % des Copolymeren ausmacht, die eine Erweichungstemperatur gemessen nach Vicat von mindestens 120°C vor dem biaxialen Recken bzw- mindestens 117°C nach dem biaxialen Recken besitzt und erhältlich ist durch Gußpolymerisation, wobei die Temperatur zur Endpolymerisation mindestens 5 Std. bei 110 bis 130 °C gehalten wird.

2. Kunststoffplatte gemäß Anspruch 1, dadurch gekennzeichnet, daß sie biaxial gereckt wird.

3. Kunststoffplatte gemäß Anspruch 1 oder 2, dadurch gekennzeichnet, daß sie 0.005 bis 0.5% eines UV-Stabilisators auf Basis eines sterisch gehinderten Amins (HALS, Hindered Amine Light Stabilizer) enthält.

4. Kunststoffplatte gemäß Anspruch 1 oder 2, dadurch gekennzeichnet, daß sie 0.005 bis 0.5% eines UV-Absorbers enthält.

5. Kunststoffplatte gemäß Anspruch 3 und 4.

6. Kunststoffplatte gemäß einem oder mehreren der Ansprüche 1 bis 5, dadurch gekennzeichnet, daß sie 0.001 bis 0.1% eines Trennmittels enthält.

7. Kunststoffplatte gemäß einem oder mehreren der Ansprüche 1 bis 6, dadurch gekennzeichnet, daß das mehrfunktionelle Acrylat Trimethylolpropantriacrylat und/oder Hexandioldiacrylat ist.

8. Kunststoffplatte gemäß einem oder mehreren der Ansprüche 1 bis 7, dadurch gekennzeichnet, daß das Copolymere 0.01 bis 1 % polymerisierbare Einheiten eines weiteren Monomeren, nämlich eines Esters und/oder Amids der Acryl- und/oder Methacrylsäure enthält.

9. Kunststoffplatte gemäß einem oder mehreren der Ansprüche 1 bis 8, dadurch gekennzeichnet, daß das weitere Monomere ein mehrfunktionelles Methacrylat und/oder ein hydroxyfunktionelles (Meth)acrylat ist.

10. Kunststoffplatte gemäß einem oder mehreren der Ansprüche 1 bis 9, dadurch gekennzeichnet, daß sie einen Restmonomerengehalt von <0.5%, einen Spannungskorrosionswert von > 18 N/mm² und eine Erweichungstemperatur gemessen nach Vicat von mindestens 120°C vor dem biaxialen Recken bzw. mindestens 117°C nach dem biaxialen Recken besitzt.

11. Kunststoffplatte gemäß einem oder mehreren der Ansprüche 1 bis 9, dadurch gekennzeichnet, daß sie einen Restmonomerengehalt von <0.3%, einen Spannungskorrosionswert von > 18 N/mm² und eine Erweichungstemperatur gemessen nach Vicat von mindestens 120°C vor dem biaxialen Recken bzw. mindestens 117°C nach dem biaxialen Recken besitzt.

## Claims

1. A transparent plastic pane for aircraft glazing, substantially comprising a copolymer of methyl methacrylate and polyfunctional acrylates, wherein the proportion of methyl methacrylate is > 95% by weight and the proportion of polyfunctional acrylates is 0.5 to 5% of the copolymer, having a softening temperature measured according to Vicat of at least 120° C before biaxial stretching, or at least 117° C after biaxial stretching, and being obtainable by means of cast polymerisation wherein the temperature for final polymerisation is maintained at 110° C to 130° C for at least 5 hours.

2. A plastic pane according to claim 1, characterised in that it is biaxially stretched.

3. A plastic pane according to claim 1 or 2,
characterised in that it contains 0.005 to 0.5% of a UV stabiliser on the basis of a sterically-hindered amine (HALS, Hindered Amine Light Stabiliser).

4. A plastic pane according to claim 1 or 2,
characterised in that it contains 0.005 to 0.5% of a UV absorber.

5. A plastic pane according to claims 3 and 4.

6. A plastic pane according to one or more of claims 1 to 5, characterised in that it contains 0.001 to 0.1% of a separating agent.

7. A plastic pane according to one or more of claims 1 to 6, characterised in that the polyfunctional acrylate is trimethylolpropanetriacrylate and/or hexanedioldiacrylate.

8. A plastic pane according to one or more of claims 1 to 7, characterised in that the copolymer contains 0.01 to 1% polymerisable units of a further monomer, namely an ester and/or amide of acrylic and/or methacrylic acid.

9. A plastic pane according to one or more of claims 1 to 8, characterised in that the further monomer is a polyfunctional methacrylate and/or a hydroxyfunctional (meth)acrylate.

10. A plastic pane according to one or more of claims 1 to 9, characterised in that it has a residual monomer content of <0.5%, a voltage corrosion value of 18 N/mm² and a softening temperature, measured according to Vicat, of at least 120° C before biaxial stretching or at least 117° C after biaxial stretching.

11. A plastic pane according to one or more of claims 1 to 9, characterised in that it has a residual monomer content of <0.3%, a voltage corrosion value of 18 N/mm² and a softening temperature, measured according to Vicat, of at least 120° C before biaxial stretching or at least 117° C after biaxial stretching.

## Revendications

1. Plaque de matière plastique transparente pour vitrage pour avions constituée pour l'essentiel d'un copolymère de méthacrylate de méthyle et d'acrylates polyfonctionnels, dans lequel la proportion de méthacrylate de méthyle est supérieure à 95 % en poids et la proportion en acrylates polyfonctionnels est de 0,5 à 5 % du copolymère qui possède une température de ramollissement, mesurée selon Vicat, d'au moins 120°C avant l'étirement biaxial, ou selon les cas d'au moins 117°C après l'étirement biaxial, et que l'on peut obtenir par polymérisation par fusion, la température pour la polymérisation finale étant maintenue pendant au moins 5 heures entre 110 et 130°C.

2. Plaque de matière plastique selon la revendication 1,
caractérisée en ce qu'
on l'étire de façon biaxiale.

3. Plaque de matière plastique selon la revendication 1 ou 2,
caractérisée en ce qu'
elle contient de 0,005 à 0,5 % d'un stabilisateur UV à base d'une amine stériquement empêchée (HALS - en anglais "Hindered Amine Light Stabiliser").

4. Plaque de matière plastique selon la revendication 1 ou 2,
caractérisée en ce qu'
elle contient de 0,005 à 0,5 % d'un agent absorbant d'UV.

5. Plaque de matière plastique selon la revendication 3 ou 4.

6. Plaque de matière plastique selon une ou plusieurs des revendications 1 à 5,
caractérisée en ce qu'
elle contient de 0,001 à 0,1 % d'un agent de séparation.

7. Plaque de matière plastique selon une ou plusieurs des revendications 1 à 6,
caractérisée en ce que
l'acrylate polyfonctionnel est le triacrylate de triméthylolpropane et/ou le diacrylate d'hexanediol.

8. Plaque de matière plastique selon une ou plusieurs des revendications 1 à 7,
caractérisée en ce que
le copolymère contient de 0,01 à 1 % d'unités polymérisables d'un autre monomère, à savoir d'un ester et/ou d'un amide d'un acide acrylique et/ou d'un acide méthacrylique.

9. Plaque de matière plastique selon une ou plusieurs des revendications 1 à 8,
caractérisée en ce que
l'autre monomère est un méthacrylate polyfonctionnel et/ou un (méth)acrylate hydroxyfonctionnel.

10. Plaque de matière plastique selon une ou plusieurs des revendications 1 à 9,
caractérisée en ce qu'
elle possède une teneur en monomère résiduelle inférieure à 0,5 %, une valeur de corrosion sous tension de 18 N/mm², et une température de ramollissement, mesurée selon Vicat, d'au moins 120°C avant l'étirement biaxial, ou selon les cas d'au moins 117°C après l'étirement biaxial.

11. Plaque de matière plastique selon une ou plusieurs des revendications 1 à 9,
caractérisée en ce qu'
elle possède une teneur en monomère résiduel inférieure à 0,3 %, une valeur de corrosion sous tension supérieure à 18 N/mm et une température de ramollissement, mesurée selon Vicat, d'au moins 120°C avant l'étirement biaxial, ou selon les cas d'au moins 117°C après l'étirement biaxial.
